# EUROPEAN PATENT SPECIFICATION

(11) **EP 3 725 443 B1**
(45) Date of publication and mention of the grant of the patent: **17.05.2023**
(21) Application number: 20169535.0
(22) Date of filing: 15.04.2020
(51) Int. Cl.: B27B 5/32, B23D 47/00

(54) **VIBRATION DAMPING MECHANISMS FOR CIRCULAR SAWS**
SCHWINGUNGSDÄMPFUNGSMECHANISMEN FÜR KREISSÄGEN
MÉCANISMES D'AMORTISSEMENT DE VIBRATIONS POUR SCIES CIRCULAIRES

(30) Priority: 15.04.2019 HK 19122350
(43) Date of publication of application: 21.10.2020
(73) Proprietor: Techtronic Cordless GP, Anderson, SC 29621 (US)
(72) Inventor: Lam, Chin Hung, Kwai Chung (HK); Lee, Kwan Wing, Kwai Chung (HK)
(74) Representative: Novagraaf Group

(56) References cited:
- EP-A1- 2 666 571
- WO-A2-2006/058898
- DE-B1- 2 602 437
- US-A- 4 137 806
- US-A- 4 466 187

## Description

### TECHNICAL FIELD

The present invention relates to a saw according to the preamble of claim 1. Such a saw is known from US 4 466 187 A.

### BACKGROUND

Circular saws are often used for cutting materials such as wood, plastic, or metal, and may be hand-held or mounted to a machine. In particular, hand-held circular saws are commonly used due to their light weight and convenience to use. These hand-held circular saws generally include a handle connected to the housing of the saw. During operation of the saw, vibrations may be transmitted from the rotating saw blade to the handle, increasing fatigue of the operator. In addition, undesired noise may also be produced by the rotating saw blade during idling and cutting of the saw.

### SUMMARY OF THE INVENTION

To solve or reduce at least some of the drawbacks associated with the conventional saw, the present invention discloses a saw comprises a damping element adjacent a saw blade.

According to the present invention, there is provided a saw according to claim 1 that comprises a housing, a motor disposed in the housing, a motor shaft driven by the motor, an output shaft coupled to the motor shaft for co-rotation, a saw blade rotated by the output shaft; and a first damping element adjacent the saw blade. Preferred embodiments of the present invention are defined in the dependent claims.

Preferably, a third damping element is in contact with one side of the saw blade.

More preferably, the third damping element is located around the output shaft.

More preferably, the third damping element is fixed by a collar.

Most preferably, the third damping element has an annular shape, and is fixed coaxially to the saw blade by the collar.

In a variation of preferred embodiment, the saw further includes a fourth damping element in contact with another side of the saw blade.

According to the present invention, the housing includes a blade guard covering a portion of the saw blade; and wherein the first damping element is located inside the blade guard.

Preferably, at least a portion of the first damping element has a sheet shape. According to the present invention the first damping element is tangent to a rotational direction of the saw blade.

Preferably, the first damping element includes a sound absorbing material.

Preferably, at least a portion of the blade guard comprises a geometrical pattern of the first damping element adjacent the saw blade.

The present invention provides a saw achieving vibration and noise reduction during operation. It is advantageous in that the damping elements can be employed in existing saws without modification and sacrificing cutting depth and angle, by simply attaching the damping elements to the saw blade and fixing the damping elements by the collars. The vibration damping features provided herein is readily used, when operating the saw, to mitigate fatigue and discomfort caused by the vibration of the rotating saw blade to the operator, thereby improving operator experience and reducing the risk of accident.

### BRIEF DESCRIPTION OF THE DRAWINGS

Embodiments of the present invention will now be described, by way of example, with reference to the accompanying drawings in which:
Figure 1 is a perspective side view of a saw in accordance with one embodiment of the present invention;
Figure 2 is a perspective view of the saw in Figure 1 with an exploded view of the arrangement of the saw blade, the damping elements and the collars in accordance with one embodiment of the present invention;
Figure 3 is a cross-sectional view of the arrangement of the saw blade, the damping elements and the collars in accordance with one embodiment of the present invention;
Figure 4 is a perspective side view of a saw in accordance with another embodiment of the present invention; and
Figure 5 is a cross-sectional view of the saw in Figure 4 showing the arrangement of the saw blade, the blade guards and the damping elements in accordance with one embodiment of the present invention.

In the drawings, like numerals indicate like parts throughout the several embodiments described herein.

### DETAILED DESCRIPTION OF THE PREFERRED EMBODIMENT

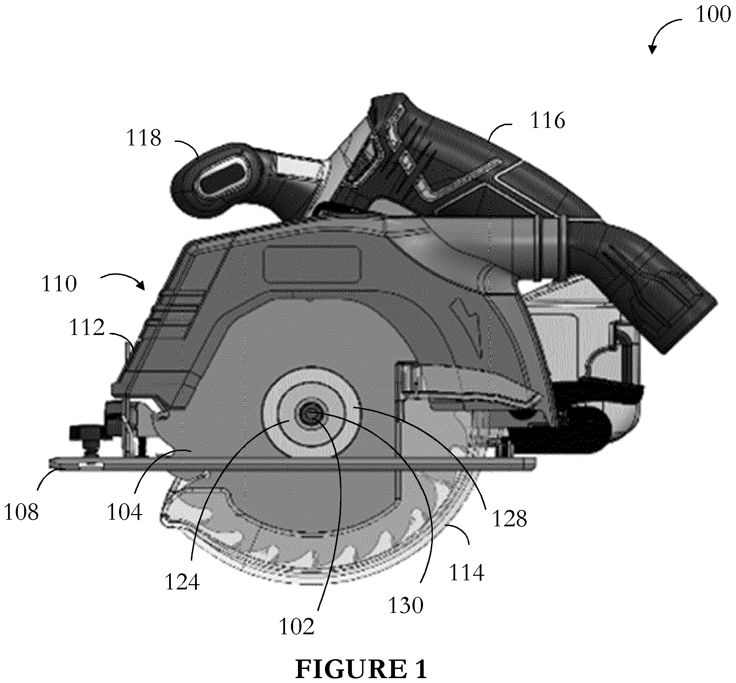

With reference to Figures 1 to 3, there is provided a circular saw 100 in accordance with one embodiment that may be used for cutting a workpiece (e.g. wooden material) using rotary motion. The saw 100 contains a housing 110 having an upper blade guard 112 and a lower blade guard 114 adjacent its main body, a motor (not shown) disposed in the housing 110, a motor shaft (not shown) driven by the motor, an output shaft 102 coupled to the motor shaft for co-rotation, a circular saw blade 104 rotated by the output shaft 102, and damping elements 106, 106' adjacent the saw blade 104. The motor and its associated power transmission mechanism in the circular saw 100 is well-known in the art so they will not be described in any further details here.

The housing 110 further contains a first handle 116 and a second handle 118 connected to the main body of the housing 110 for holding by an operator of the saw 100. The second handle 118 is a pommel handle, as shown in Figure 1. The operator may operate the saw 100 in a two-handed operation by holding the first and second handles 116, 118 according to the standing position of the operator or the orientation of the material to be cut. Although not explicitly shown, the handles 116, 118 may further include insulated gripping surfaces, which may be advantageous when performing an operation where the saw blade 104 may contact hidden wiring.

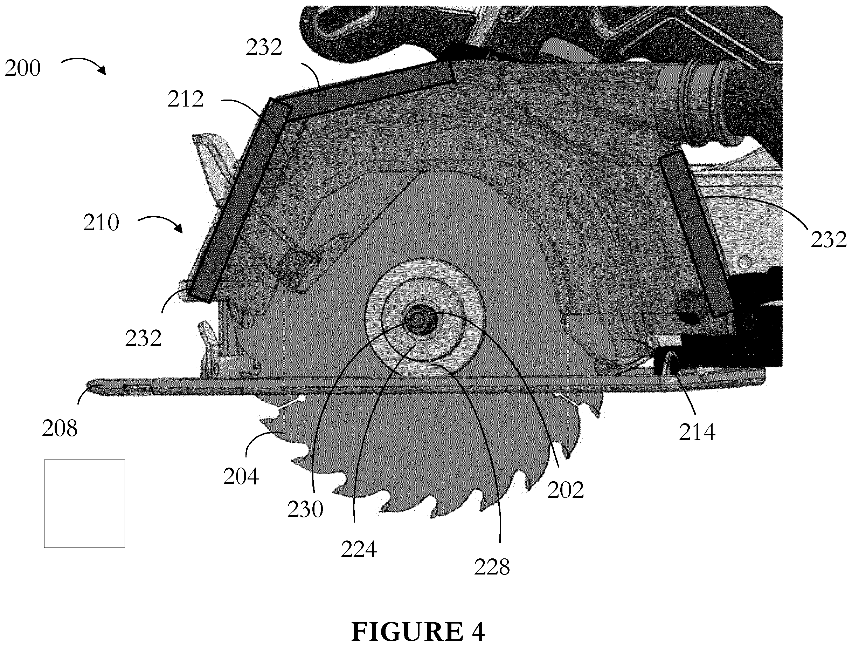

The upper blade guard 112 covers an upper portion of the saw blade 104 proximal to the operator, preventing the operator getting injured by the sharp saw blade 104 by accident, or by the debris that may be kicked up during operation. The lower blade guard 114, on the other hand, covers a lower portion of the saw blade 104 when the saw 100 is not in use. The upper blade guard 112 is stationary while the lower blade guard 114 is rotatable between a first, open position at which the saw blade 104 is exposed for operation and a second, closed position at which the saw blade 104 is covered for storage. Figure 1 shows the lower blade guard 114 in its closed position. In its open position (Figure 4), the lower blade guard 114 is partially received within the upper blade guard 112.

The saw 100 also contains a base plate 108 which supports the housing 110 and is positioned on the surface of the workpiece to be cut during operation. The base plate 108 is provided with an elongated slot, through which the saw blade 104 may protrude below the base plate 108.

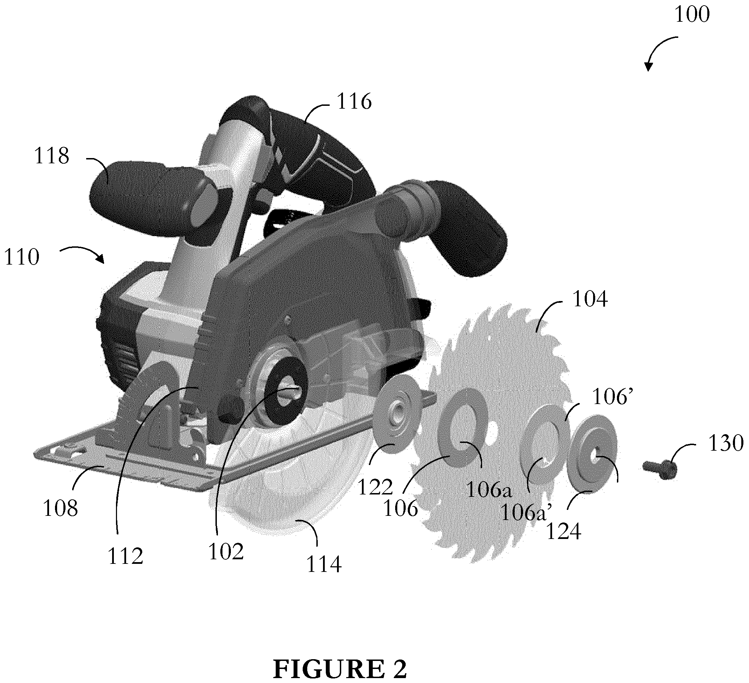

Figure 2 shows the arrangement of the damping elements 106, 106' relative to the saw blade 104. Similar to conventional arrangements, the saw blade 104 is fixed to the output shaft 102 by an inner collar 122 on one side of the saw blade 104 proximal to the housing 110 and an outer collar 124 on another side of the saw blade 104, using a locking screw 130.

In addition to the saw blade fastening mechanism as in conventional arrangements, the saw 100 in this embodiment includes two identical damping elements 106, 106', in which the first damping element 106 is in contact with one side of the saw blade 104, while the second damping element 106' is in contact with another side of the saw blade 104. In other words, the saw blade 104 is sandwiched between the two damping elements 106, 106'. The first and second damping elements 106, 106' are located around the output shaft 102, where vibration with the highest frequency is found. In the illustrated embodiment, the damping elements 106, 106' have an annular shape with an opening 106a and an opening 106a', respectively, each with a diameter larger than the diameter of the output shaft 102, such that the output shaft 102 extends through the openings 106a, 106a' in the damping elements 106, 106'.

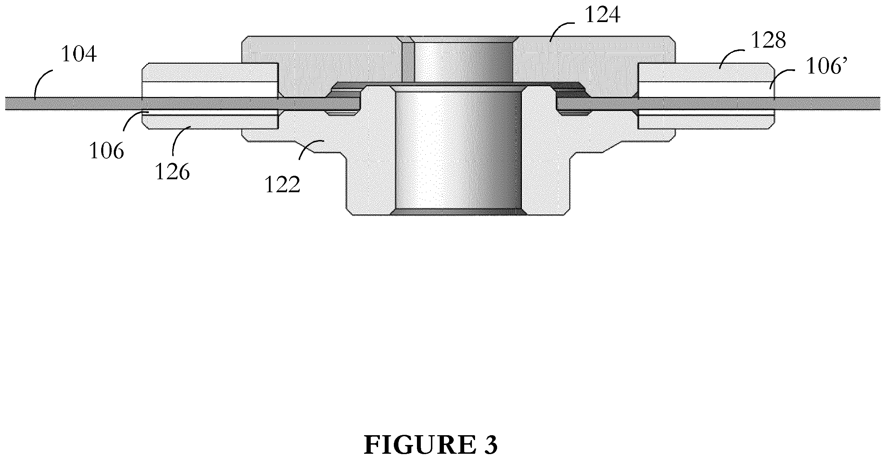

The first and second damping elements 106, 106' and the saw blade 104 are in turn sandwiched between and fixed by the inner and outer collars 122, 124 located around the output shaft 102. As shown in Figures 2 and 3, the first and second damping elements 106, 106', and the inner and outer collars 122, 124 all have an annular shape. In this embodiment, the damping elements 106, 106' are fixed coaxially to the saw blade 104 by the collars 122, 124, in which the output shaft 102 extends through. Such arrangement is held in place by the locking screw 130.

Referring to Figure 3, a cross-sectional view of the arrangement of the saw blade 104, the damping elements 106, 106' and the collars 122, 124 is shown, where the inner and outer collars 122, 124 are provided with a flange 126 and a flange 128, respectively. The damping elements 106, 106' are supported and slightly compressed by the flanges 126, 128 when the damping elements 106, 106' are fixed by the collars 122, 124 to the saw blade 104. Additionally, the flanges 126, 128, and thus the damping elements 106, 106', may be partially received in a space on an outer edge of the collars 122, 124, so as to firmly press the damping elements 106, 106' against both sides of the saw blade 104. Such compression may provide better effectiveness for vibration and/or noise reduction of the saw 100 during operation as the damping elements 106, 106' are in closer contact with the saw blade 104 to absorb vibration and/or audio frequency. In the embodiment as illustrated, the shape and size of the flanges 126, 128 are identical to those of the damping elements 106, 106' so that the entire damping elements 106, 106' are fixedly pressed onto the saw blade 104, thereby achieving better vibration and noise reduction.

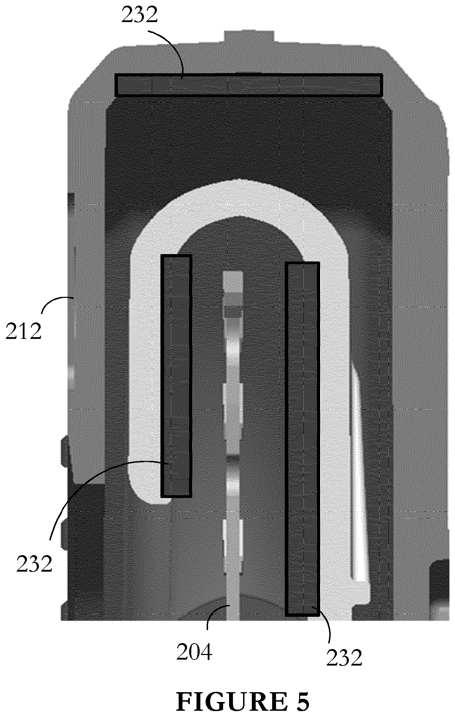

Figures 4 and 5 illustrate a saw 200 according to another embodiment of the present invention. This embodiment employs much of the same structure with regards to the motor, the handles, etc. as the embodiment of the saw 100 described above in connection with Figures 1 to 3. Accordingly, the following description focuses primarily upon the structure and features that are different than the embodiments described above in connection with Figures 1 to 3. Reference should be made to the description above in connection with Figures 1 to 3 for additional information regarding the structure and features, and possible alternatives to the structure and features of the saw 200 illustrated in Figures 4 and 5 and described below.

With reference to Figures 4 and 5, the saw 200 includes a plurality of damping elements 232 located inside both of the upper and lower blade guards 112, 114 for improved noise reduction. Figure 4 shows three damping elements 232 being disposed on an inner surface of the upper blade guard 212 and substantially surrounding the edge of the saw blade 204. Additionally, additional damping elements 232 are disposed on an inner surface of the lower blade guard 214, as illustrated in Figure 5. These damping elements 232 are positioned adjacent the saw blade 204 to absorb noise generated by the saw 200 and the saw blade 204 during operation.

In one embodiment, at least a portion of each of the damping elements 232 in the upper and lower blade guards 212, 214 has a sheet shape which is either tangent to a rotational direction of the saw blade 204, or parallel to a side of the saw blade 204. In a preferred embodiment as shown in Figure 5, the damping element 232 in the upper blade guard 212 is disposed tangent to the rotational direction of the saw blade 204, while the damping elements 232 in the lower blade guard 214 are parallel to the sides of the saw blade 204. Such arrangement allows a more compact design of the blade guards 212, 214 compared to an arrangement where the damping elements 232 in the upper blade guard 212 are parallel to the saw blade 204, since the distance between the upper and lower blade guards 212, 214 when the lower blade guard 214 is in its open position, and the thickness of the blade guards 212, 214 could be as small as possible.

To facilitate vibration and noise reduction during operation of the saw, the damping elements in the embodiments described above may include rubber, plastics, or other damping materials known in the art that absorb vibration. Also, the damping elements may be resilient such that they would not easily deform upon the compression by the flanges, thus increasing the life of the damping elements. The damping elements may further include a sound absorbing material, for example a fibrous material.

In one embodiment, at least a portion of each of the blade guards contains a geometrical pattern of the damping elements adjacent the saw blade. Preferably, the geometrical pattern of the damping elements includes a sound absorbing or diffusing pattern to reduce the noise produced by the saw and the saw blade during operation. For example, the geometrical pattern may include an egg crate pattern and a honeycomb pattern to maximise noise reduction of the saw and the saw blade.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the scope thereof, and, therefore, only such limitations should be imposed as are indicated by the appended claims.

The present embodiments are, therefore, to be considered in all respects as illustrative and not restrictive. For example, although the saw is embodied as a circular saw, any of the above-mentioned embodiments may be applied to other types of saws (e.g. a miter saw). The number, shape and size of the damping elements may also be different to those illustrated.

For example, according to the design or construction to the saw, the saw may include more or less than two damping elements with different shapes and sizes. The damping elements may have a shape other than a sheet shape, for example, a block shape, a spherical shape, etc. These shapes may be useful other types of saws such as a miter saw.

The damping elements may be made of the same material or different materials. For example, the damping elements in contact with the saw blade may be made of rubber which is better at absorbing vibration, while the damping elements inside the blade guards may be made of a combination of rubber-coated fabrics which is better at absorbing sound.

Additionally, the arrangement of the damping elements may be different to the above-mentioned arrangements. For example, the damping elements may exist in only one of the upper and lower blade guards. Yet, additionally, the damping elements may be utilised in different parts of the housing or the blade guards. On the other hand, the damping elements may also be applied to the entire inner surface of both the upper and lower blade guards.

It will also be readily understood that the structures of the inner and outer collars, and the flanges may be modified according to actual needs. For example, the flange and the collar may be formed integrally, or may be formed as separate components and fixed using various means, such as fasteners and adhesives.

## Claims

1. A saw (100; 200), comprising:
a housing (110; 210) including a blade guard (112, 114; 212, 214);
a motor disposed in the housing;
a motor shaft driven by the motor;
an output shaft (102; 202) coupled to the motor shaft for co-rotation;
a saw blade (104; 204) rotated by the output shaft, a portion of the saw blade being covered by the blade guard; and
a first damping element (232) located inside the blade guard and adjacent the saw blade the first damping element being tangent to a rotational direction of the saw blade.

2. The saw according to claim 1, wherein the blade guard comprises an upper, stationary blade guard, and a lower, rotatable blade guard.

3. The saw according to claim 1 or 2, wherein the first damping element is located inside the upper blade guard.

4. The saw according to claim 3, further comprising a second damping element located inside the lower blade guard and adjacent the saw blade, the second damping element being parallel to a side of the saw blade.

5. The saw according to any one of claims 1 to 4, wherein at least one of at least a portion of the first damping element and the second damping element has a sheet shape.

6. The saw according to any one of claims 1 to 5, wherein at least one of the first damping element and the second damping element includes a sound absorbing material.

7. The saw according to any one of claims 1 to 6, wherein at least a portion of the blade guard comprises a geometrical pattern of the first damping element or the second damping element adjacent the saw blade.

8. The saw according to any one of claims 1 to 7, further comprising a third damping element being in contact with one side of the saw blade.

9. The saw according to claim 8, wherein the third damping element is located around the output shaft.

10. The saw according to claim 8 or 9, wherein the third damping element is fixed by a collar.

11. The saw according to claim 10, wherein the third damping element has an annular shape, and is fixed coaxially to the saw blade by the collar.

12. The saw according to any one of claims 8 to 11, further including a fourth damping element in contact with another side of the saw blade

## Patentansprüche

1. Säge (100; 200), umfassend:
ein Gehäuse (110; 210), einschließlich eines Klingenschutzes (112, 114; 212, 214);
einen Motor, der in dem Gehäuse angeordnet ist;
eine Motorwelle, die durch den Motor angetrieben wird;
eine Ausgangswelle (102; 202), die mit der Motorwelle zum gemeinsamen Drehen gekoppelt ist;
ein Sägeblatt (104; 204), das durch die Ausgangswelle gedreht wird, wobei ein Abschnitt des Sägeblatts durch den Klingenschutz abgedeckt ist; und
ein erstes Dämpfungselement (232), das sich innerhalb des Klingenschutzes und angrenzend an das Sägeblatt befindet, wobei das erste Dämpfungselement tangential zu einer Drehrichtung des Sägeblatts ist.

2. Säge nach Anspruch 1, wobei der Klingenschutz einen oberen, stationären Klingenschutz und einen unteren, drehbaren Klingenschutz umfasst.

3. Säge nach Anspruch 1 oder 2, wobei sich das erste Dämpfungselement innerhalb des oberen Klingenschutzes befindet.

4. Säge nach Anspruch 3, ferner umfassend ein zweites Dämpfungselement, das sich innerhalb des unteren Klingenschutzes und angrenzend an das Sägeblatt befindet, wobei das zweite Dämpfungselement parallel zu einer Seite des Sägeblatts ist.

5. Säge nach einem der Ansprüche 1 bis 4, wobei mindestens einer von mindestens einem Abschnitt des ersten Dämpfungselementes und des zweiten Dämpfungselementes eine Lagenform aufweist.

6. Säge nach einem der Ansprüche 1 bis 5, wobei mindestens eines des ersten Dämpfungselementes und des zweiten Dämpfungselementes ein schallabsorbierendes Material einschließt.

7. Säge nach einem der Ansprüche 1 bis 6, wobei mindestens ein Abschnitt des Klingenschutzes ein geometrisches Muster des ersten Dämpfungselementes oder des zweiten Dämpfungselementes angrenzend an das Sägeblatt umfasst.

8. Säge nach einem der Ansprüche 1 bis 7, ferner umfassend ein drittes Dämpfungselement, das mit einer Seite des Sägeblatts in Kontakt steht.

9. Säge nach Anspruch 8, wobei sich das dritte Dämpfungselement um die Ausgangswelle herum befindet.

10. Säge nach Anspruch 8 oder 9, wobei das dritte Dämpfungselement durch einen Kragen fixiert ist.

11. Säge nach Anspruch 10, wobei das dritte Dämpfungselement eine ringförmige Form aufweist und koaxial zu dem Sägeblatt durch den Kragen fixiert ist.

12. Säge nach einem der Ansprüche 8 bis 11, ferner umfassend ein viertes Dämpfungselement, das mit einer anderen Seite des Sägeblatts in Berührung ist.

## Revendications

1. Scie (100 ; 200), comprenant :
un boîtier (110 ; 210) incluant un protège-lame (112, 114 ; 212, 214) ;
un moteur disposé dans le boîtier ;
un arbre de moteur entraîné par le moteur ;
un arbre de sortie (102 ; 202) couplé à l'arbre de moteur pour une corotation ;
une lame de scie (104 ; 204) entraînée en rotation par l'arbre de sortie, une partie de la lame de scie étant recouverte par le protège-lame ; et
un premier élément d'amortissement (232) situé à l'intérieur du protège-lame et adjacent à la lame de scie, le premier élément d'amortissement étant tangent à une direction de rotation de la lame de scie.

2. Scie selon la revendication 1, dans laquelle le protège-lame comprend un protège-lame supérieur, fixe, et un protège-lame inférieur, rotatif.

3. Scie selon la revendication 1 ou 2, dans laquelle le premier élément d'amortissement est situé à l'intérieur du protège-lame supérieur.

4. Scie selon la revendication 3, comprenant en outre un deuxième élément d'amortissement situé à l'intérieur du protège-lame inférieur et adjacent à la lame de scie, le deuxième élément d'amortissement étant parallèle à un côté de la lame de scie.

5. Scie selon l'une quelconque des revendications 1 à 4, dans laquelle au moins l'une d'au moins une partie du premier élément d'amortissement et du deuxième élément d'amortissement a une forme de feuille.

6. Scie selon l'une quelconque des revendications 1 à 5, dans laquelle au moins l'un du premier élément d'amortissement et du deuxième élément d'amortissement inclut un matériau d'absorption acoustique.

7. Scie selon l'une quelconque des revendications 1 à 6, dans laquelle au moins une partie du protège-lame comprend un motif géométrique du premier élément d'amortissement ou du deuxième élément d'amortissement adjacent à la lame de scie.

8. Scie selon l'une quelconque des revendications 1 à 7, comprenant en outre un troisième élément d'amortissement en contact avec un côté de la lame de scie.

9. Scie selon la revendication 8, dans laquelle le troisième élément d'amortissement est situé autour de l'arbre de sortie.

10. Scie selon la revendication 8 ou 9, dans laquelle le troisième élément d'amortissement est fixé par un collier.

11. Scie selon la revendication 10, dans laquelle le troisième élément d'amortissement a une forme annulaire, et est fixé coaxialement à la lame de scie par le collier.

12. Scie selon l'une quelconque des revendications 8 à 11, comprenant en outre un quatrième élément d'amortissement en contact avec un autre côté de la lame de scie.
